(19) Europäisches Patentamt
European Patent Office
Office européen des brevets

(11) EP 0 982 279 B2

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**17.10.2012 Patentblatt 2012/42**

(45) Hinweis auf die Patenterteilung:
**17.08.2005 Patentblatt 2005/33**

(21) Anmeldenummer: **99114672.1**

(22) Anmeldetag: **27.07.1999**

(51) Int Cl.:
***C04B 41/63*** *(2006.01)* ***B01F 17/00*** *(2006.01)*

(54) **Wässrige Zubereitungen, die ein Polymer als filmbildenden Bestandteil und einen anionischen Emulgator enthalten**

Aqueous compositions comprising a film forming polymer and an anionic emulsifier

Composition aqueuse comprenant un polymère filmifiant et un émulsifiant anionique

(84) Benannte Vertragsstaaten:
**DE FR GB SE**

(30) Priorität: **28.07.1998 DE 19833917**

(43) Veröffentlichungstag der Anmeldung:
**01.03.2000 Patentblatt 2000/09**

(73) Patentinhaber: **BASF SE**
**67056 Ludwigshafen (DE)**

(72) Erfinder:
- **Schwartz, Manfred**
  **67227 Frankenthal (DE)**
- **Bechert, Bertold**
  **67269 Grünstadt (DE)**
- **Wiese, Harm**
  **69115 Heidelberg (DE)**
- **Hümmer, Wolfgang**
  **67134 Birkenheide (DE)**

(74) Vertreter: **Reitstötter - Kinzebach**
**Patentanwälte**
**Ludwigsplatz 4**
**67059 Ludwigshafen (DE)**

(56) Entgegenhaltungen:
**EP-A- 0 409 459 EP-A- 0 469 295**
**EP-A1- 0 558 980 WO-A1-96/33143**
**WO-A1-97/26303 WO-A1-98/23656**
**WO-A1-98/35995 DE-A- 2 148 458**
**DE-A- 2 611 614 DE-A- 3 820 154**
**DE-A- 4 341 260 DE-A1- 4 447 550**
**FR-A- 1 343 230 US-A- 5 420 195**
**US-A- 5 753 746**

- **POLYMER PAINT COLOUR JOURNAL186 (4380) Mai 1996, Seiten 44 - 48**
- **Datenblatt Fettalkoholethersulfate/ Alkylphenolethersul fate, Henkel**
- **Datenblatt Disponil (R) FES 77 IS, Henkel (Februar 1997)**
- **PETER A. LOVELL, MOHAMED S. EL-AASSER: 'Emulsion Polymerisation and Emulsion Polymers' Juni 1997, JOHN WILEY AND SONS, Seiten 622 - 627**

Bemerkungen:
Die Akte enthält technische Angaben, die nach dem Eingang der Anmeldung eingereicht wurden und die nicht in dieser Patentschrift enthalten sind.

EP 0 982 279 B2

**Beschreibung**

Die vorliegende Erfindung betrifft wässrige Zubereitungen, die wenigstens ein Polymer P als filmbildenden Bestandteil enthalten, das in der wässrigen Phase der Zubereitung in dispers verteilter Form vorliegt. Die vorliegende Erfindung betrifft auch deren Verwendung zur Beschichtung von mineralischen Formkörpern.

Unter mineralischen Formkörpern sind hier und im Folgenden Formkörper zu verstehen, die ein mineralisches Bindemittel und mineralische Zuschläge enthalten. Die Zubereitungen aus mineralischem Bindemittel und den Zuschlägen sind in feuchtem Zustand formbar, und verfestigen sich an der Luft oder auch unter Wasser, gegebenenfalls unter Einwirkung erhöhter Temperatur, im Laufe der Zeit steinartig zu dem gewünschten mineralischen Formkörper. Mineralische Bindemittel sind allgemein bekannt. Es handelt sich um feinteilige anorganische Stoffe wie Kalk, Gips, Ton und/oder Zement. Mineralische Zuschläge sind in der Regel körniges oder faserförmiges natürliches oder künstliches Gestein (Kies, Sand, Mineralfasern) mit Korngrößen oder Faserlängen die dem jeweiligen Verwendungszweck in an sich bekannter Weise angepasst sind. Daneben enthalten die mineralischen Formkörper in Sonderfällen auch Metalle oder organische Zuschläge. Häufig werden zum Zweck der Farbgebung auch Buntpigmente als Zuschläge mitverwendet.

Beispiele für erfindungsgemäß zu beschichtende mineralische Formkörper sind z. B. Betonröhren, z. B. für Abwasser, Betondachsteine (vgl. z. B. DE-A 39 01 073) oder Randsteine, Treppenstufen, Bodenplatten, Sockelplatten sowie Faserzementplatten, d. h. flächige mineralische Formkörper, die mit anorganischen oder organischen Fasern, z. B. Polyester- oder Nylonfasern, gefüllt sind.

Nachteilig an mineralischen Formkörpern ist, dass sie unter dem Einfluss der Witterung (insbesondere der Einwirkung von Wasser) ihre Festigkeit verlieren, da die kationischen Bestandteile wie $Ca^{2+}$ im Laufe der Zeit herausgelöst werden. Eine weitere nachteilige Eigenschaft mineralischer Formkörper ist das Auftreten von Ausblüherscheinungen. Diese sind vermutlich darauf zurückzuführen, dass die mineralischen Bindemittel mehrwertige Kationen wie $Ca^{2+}$ in alkalischer Umgebung enthalten. Durch Reaktion mit dem Kohlendioxid aus der Luft können sich so an der Oberfläche der mineralischen Formkörper in Wasser schwerlösliche unansehnliche weiße Kalkflecken ausbilden. Das Erscheinungsbild des Ausblühens kann sowohl bereits während des Erhärtens von frisch zubereiteten mineralischen Formkörpern als auch unter der Einwirkung der Witterung auf bereits erhärtete mineralische Formkörper auftreten.

Zur Vermeidung der vorgenannten nachteiligen Eigenschaften werden die mineralischen Formkörper häufig mit einer Beschichtung versehen. Hierzu werden heute in der Regel wässrige Beschichtungssysteme eingesetzt, die als filmbildenden Bestandteil eine wässrige Polymerisatdispersion enthalten. Übliche filmbildende Bestandteile umfassen Styrol/Acrylester-Copolymerisate, Homo- und Copolymerisate des Vinylacetats, Reinacrylate und ähnliche. Durch die Beschichtung erhalten die mineralischen Formkörper ein glänzendes Erscheinungsbild, das für viele Anwendungen, insbesondere bei Betondachsteinen erwünscht ist.

Ein wirksamer Schutz mineralischer Formkörper vor den oben beschriebenen Ausblühungen konnte durch Beschichtungsmassen auf der Basis von Styrol/Acrylat-Dispersionen bzw. Reinacrylatdispersionen der EP-A-469 295 und der DE-A-195 14 266 verbessert werden. Hierfür empfiehlt die EP-A-469 295 die Verwendung eines speziellen anionischen Emulgators und die DE-A-195 14 266 die Verwendung von Polymerisaten, welche spezielle Monomere mit Sulfonatgruppen einpolymerisiert enthalten.

Die Beschichtungen des Standes der Technik haben alle den Nachteil, dass ihre Wasseraufnahme vergleichsweise hoch ist. Diese Wasseraufnahme birgt die Gefahr, dass niedermolekulare Bestandteile der Beschichtung, beispielsweise Emulgatoren, die zur Stabilisierung der Polymerisatteilchen in den Beschichtungsmassen erforderlich sind, bei längerer Bewitterung ausgespült werden können. Dieses Ausspülen äußert sich beispielsweise in einem verstärkten Weißanlaufverhalten oder einer Versprödung der Beschichtung. Zudem hat die Wasseraufnahme aufgrund der mit ihr einhergehenden Quellung des Polymeren eine Verringerung der mechanischen Stabilität der Beschichtung und eine Erhöhung der Oberflächenrutschigkeit zur Folge, was insbesondere bei Betondachsteinen aus Sicherheitsgründen unerwünscht ist. Außerdem besteht bei pigmenthaltigen Beschichtungen die Gefahr, dass sich der Farbeindruck aufgrund der Wasseraufnahme der Beschichtung nachteilig verändert.

Der vorliegenden Erfindung liegt somit die Aufgabe zugrunde, Beschichtungsmassen für mineralische Formkörper bereitzustellen, deren Beschichtungen sich durch eine geringe Wasseraufnahme auszeichnen und zugleich auch bei längerer Einwirkung von Feuchtigkeit ihre Festigkeit und ihr optisches Erscheinungsbild nicht nachteilig verändern.

Es wurde nun überraschenderweise gefunden, daß Zubereitungen filmbildender Polymere P Beschichtungen mit geringer Wasseraufnahme bilden, wenn die Zubereitungen als Emulgatoren Salze der Schwefelsäurehalbester ethoxilierter $C_{10}$ bis $C_{20}$-Alkanole enthalten.

Die vorliegende Erfindung betrifft somit wässrige Zubereitungen, enthaltend:

i. wenigstens ein Polymer P als filmbildenden Bestandteil, das aus ethylenisch ungesättigten Monomeren M aufgebaut ist, das in der wässrigen Phase der Zubereitung in dispers verteilter Form vorliegt und das eine Glasübergangstemperatur $T_G$ im Bereich von -25 bis +80°C aufweist, und

ii. wenigstens einen anionischen Emulgator, ausgewählt unter Salzen der allgemeinen Formel I

$$Alk\text{-}[O\text{-}Et]_n\text{-}OSO_2O^- M^+ \qquad (I)$$

worin

Alk für einen linearen oder verzweigten, gesättigten Alkylrest mit 10 bis 18 Kohlenstoffatomen steht,
Et für 1,2-Ethylen steht
n eine ganze Zahl > 20 bis 40 bedeutet, und
$M^+$ für ein einwertiges Kation oder ein Kationenäquivalent steht,

oder Mischungen dieser Salze und wenigstens einen weiteren anionischen Emulgator, ausgewählt unter den Salzen der allgemeinen Formel II,

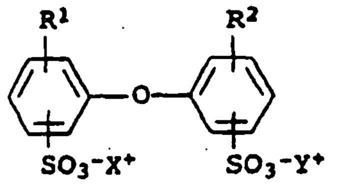

(II)

worin $R^1$ und $R^2$ unabhängig voneinander für Wasserstoff oder einen linearen oder verzweigten Alkylrest mit 4 bis 24 C-Atomen stehen und nicht gleichzeitig Wasserstoff sind, und $X^+$ und $Y^+$ gleich oder verschieden sind und für ein einwertiges Kation oder ein Kationenäquivalent stehen.

Die Erfindung betrifft auch die Verwendung derartiger Zubereitungen zur Beschichtung mineralischer Formkörper.

Unter den Salzen der allgemeinen Formel I sind solche bevorzugt, worin Alk für einen linearen oder verzweigten Alkylrest mit 12 bis 16 Kohlenstoffatomen steht. In Formel I steht n vorzugsweise für eine Zahl im Bereich von 25 bis 40. Bei Mischungen von Salzen der allgemeinen Formel I wird der Mittelwert von n in den angegebenen Bereichen liegen.

In Formel I steht $M^+$ vorzugsweise für ein Kation oder ein Kationenäquivalent eines Metalls der 1. oder der 2. Hauptgruppe des Periodensystems. Insbesondere steht $M^+$ für $Na^+$, $K^+$, 1/2 $Ca^{2+}$ oder ein Ammoniumion ($NH_4^+$) und speziell für ein Natriumkation. Häufig werden in den erfindungsgemäßen Zubereitungen Gemische von Salzen der allgemeinen Formel I eingesetzt.

Eine spezielle Ausführungsform der vorliegenden Erfindung betrifft Zubereitungen, die eine Mischung von Salzen der allgemeinen Formel I enthalten, worin Alk für lineare oder verzweigte Alkylreste mit 12 bis 14 Kohlenstoffatomen steht und n im Mittel den Wert 30 aufweist. $M^+$ steht in diesem Fall insbesondere für ein Natriumkation.

Salze der allgemeinen Formel I sind bekannt und im Handel erhältlich, beispielsweise als DISPONIL® FES 77 (Hersteller: Henkel KGaA) oder können analog zu bekannten Salzen der allgemeinen Formel I hergestellt werden.

Neben den Salzen der allgemeinen Formel I und II können die erfindungsgemäßen Zubereitungen auch davon verschiedene anionische Emulgatoren enthalten. In der Regel werden allerdings die Salze der allgemeinen Formel I wenigstens 30 Gew.-%, vorzugsweise wenigstens 50 Gew.-% und insbesondere wenigstens 60 Gew.-% der Gesamtmenge an anionischen Emulgatoren in der Zubereitung ausmachen. Für eine geringe Wasseraufnahme ist es besonders vorteilhaft, wenn die Salze der Formel I wenigstens 80 Gew.-% der anionischen Emulgatoren ausmachen.

Die Gesamtmenge an anionischen Emulgatoren liegt in der Regel im Bereich von 0,1 bis 5 Gew.-% vorzugsweise im Bereich von 0,2 bis 4 Gew.-% und insbesondere im Bereich von 0,5 bis 3 Gew.-%, bezogen auf das Polymer P in der wässrigen Zubereitung.

Geeignete weitere anionische Emulgatoren sind beispielsweise ausgewählt unter den Salzen, insbesondere den Alkali- und Ammoniumsalzen von Alkylsulfaten (Alkylrest: $C_8$-$C_{12}$), von Schwefelsäurehalbestern ethoxylierter Alkylphenole (EO-Grad: 3 bis 50, Alkylrest: $C_4$-$C_9$), von Alkylsulfonsäuren (Alkylrest: $C_{12}$-$C_{18}$) und von Alkylarylsulfonsäuren (Alkylrest: $C_9$ bis $C_{18}$).

Vorzugsweise stehen $X^+$ und $Y^+$ für Alkalimetallkationen und/oder Ammoniumionen und insbesondere für ein Natriumkation. $R^1$ und $R^2$ stehen vorzugsweise für lineare oder verzweigte Alkylreste mit 10 bis 18 C-Atomen oder für Wasserstoff. Die Verbindungen II sind allgemein bekannt, z. B. aus der EP-A 469 295. Besonders vorteilhaft sind Verbindungen II, in denen X und Y Natrium, $R^1$ ein verzweigter Alkylrest mit 10, 12, 14 oder 16 C-Atomen, insbesondere 12 C-Atomen, und $R^2$ Wasserstoff oder gleich $R^1$ ist. Häufig werden technische Gemische verwendet, die einen Anteil von 50 bis 90 Gew.-% des monoalkylierten Produktes aufweisen, beispielsweise DOWFAX® 2A1 (Warenzeichen der

Dow Chemical Company).

Für die Gesamtmenge an anionischem Emulgator gilt das oben gesagte. Die Salze der allgemeinen Formel I machen in der Regel 0,1 bis 3 Gew.-%, vorzugsweise 0,2 bis 2,0 und insbesondere 0,5 bis 1 Gew.-%, bezogen auf das Gesamtgewicht des Polymeren P, aus. Das Gewichtsverhältnis von Salz der allgemeinen Formel I zu dem Salz der allgemeinen Formel II liegt vorzugsweise im Bereich von 10:1 bis 1:2, insbesondere 8:1 bis 1:1 und speziell 5:1 bis 2:1.

Zusätzlich zu den anionischen Emulgatoren können die erfindungsgemäßen Zubereitungen auch nichtionische Emulgatoren enthalten. Geeignete nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: $C_4$-$C_9$), Ethoxylate langkettiger, linearer oder verzweigter Alkanole (EO-Grad: 3 bis 50, Alkylrest: $C_8$-$C_{36}$), sowie Polyethylenoxid/Polypropylenoxid-Blockcopolymere. Bevorzugte nichtionische Emulgatoren sind die vorgenannten Ethoxylate langkettiger Alkanole, insbesondere solche, worin der Alkylrest 12 bis 20 C-Atome aufweist und die einen Ethoxylierungsgrad von 10 bis 40 aufweisen.

Sofern die erfindungsgemäßen Zubereitungen eine Kombination aus wenigstens einem anionischen Emulgator und wenigstens einem nichtionischen Emulgator enthalten, liegt das Gewichtsverhältnis von anionischem zu nichtionischem Emulgator in der Regel im Bereich von 10:1 bis 1:5, vorzugsweise 5:1 bis 1:2 und insbesondere 3:1 bis 1:1.

Die Gesamtmenge an Emulgator liegt in der Regel im Bereich von 0,2 bis 10 Gew.-%, vorzugsweise im Bereich von 0,5 bis 5 Gew.-% und insbesondere im Bereich von 1 bis 4 Gew.-%.

Die das Polymer P konstituierenden Monomere M sind in der Regel so gewählt, daß das Polymer P in der wässrigen Phase unlöslich ist, d.h. in der wässrigen Phase in dispergierter Form vorliegt, eine Glasübergangstemperatur im Bereich von -25 bis +80°C aufweist und beim Trocknen der Zubereitung einen Polymerfilm bildet. Monomere M bzw. Mischungen der Monomere M, die diese Bedingungen erfüllen, sind dem Fachmann hinreichend bekannt.

Erfindungsgemäß bevorzugt umfassen die Monomere M:

i. 70 bis 99,9 Gew.-% wenigstens eines Monomers M1, ausgewählt unter vinylaromatischen Monomeren, den Estern monoethylenisch ungesättigter $C_3$-$C_8$-Monocarbonsäuren mit $C_1$-$C_{12}$-Alkanolen und den Vinylestern aliphatischer $C_1$-$C_{18}$-Monocarbonsäuren, und

ii. 0,1 bis 30 Gew.-% wenigstens eines damit copolymerisierbaren Monomers M2.

Beispiele für Monomere M1 sind: vinylaromatische Monomere, wie Styrol, α-Methylstyrol, o-Chlorstyrol oder Vinyltoluole; Vinylester von aliphatischen $C_1$-$C_{18}$-Monocarbonsäuren, vorzugsweise von $C_2$-$C_{12}$-Monocarbonsäuren, wie Vinylacetat, Vinylpropionat, Vinylbutyrat, Vinylvalerat, Vinylhexanoat, Vinyl-2-ethylhexanoat, Vinyldecanoat, Vinylpivalat, Vinyllaurat, Vinylstearat sowie im Handel befindliche Monomere VEOVA® 5-11 (VEOVA® X ist ein Handelsname der Fa. Shell und steht für Vinylester von α-verzweigten, aliphatischen Carbonsäuren mit X C-Atomen, die auch als Versatic® X-Säuren bezeichnet werden); Ester monoethylenisch ungesättigter $C_3$-$C_8$-Mono- oder Dicarbonsäuren mit $C_1$-$C_{18}$-, vorzugsweise $C_1$-$C_{12}$-und insbesondere $C_1$-$C_8$-Alkanolen oder $C_5$-$C_8$-Cycloalkanolen, z. B. die Ester der Acrylsäure wie Acrylsäuremethylester, Acrylsäureethylester, Acrylsäure-n-propylester, Acrylsäureisopropylester, Acrylsäure-n-butylester, Acrylsäureisobutylester, Acrylsäure-tert.-butylester, Acrylsäure-1-hexylester, Acrylsäure-2-ethylhexylester, Acrylsäurecyclohexylester, Ester der Methacrylsäure wie Methacrylsäuremethylester, Methacrylsäureethylester, Methacrylsäure-n-propylester, Methacrylsäureisopropylester, Methacrylsäure-n-butylester, Methacrylsäureisobutylester, Methacrylsäure-tert.-butylester, Methacrylsäure-1-hexylester, Methacrylsäure-2-ethylhexylester, Methacrylsäurecyclohexylester, sowie ferner die Ester der Fumarsäure und der Maleinsäure wie Fumarsäuredimethylester, Maleinsäuredimethylester oder Maleinsäuredi-n-butylester.

Vorzugsweise umfassen die Monomere M1 wenigstens zwei verschiedene Monomere M1a und M1b, wobei das Homopolymerisat des Monomers M1a eine höhere Glasübergangstemperatur als das Homopolymerisat des Monomers M1b aufweist. Üblicherweise ist das wenigstens eine Monomer M1a entweder ausgewählt unter den vorgenannten vinylaromatischen Monomeren, insbesondere Styrol, oder unter den Methacrylsäure-$C_1$-$C_4$-alkylestern, insbesondere unter Methylmethacrylat. Das Monomer M1b ist in beiden Fällen vorzugsweise ausgewählt unter den vorgenannten Alkylacrylaten, insbesondere n-Butylacrylat und 2-Ethylhexylacrylat.

Typische Monomerkombinationen M1a/M1b sind:

- Styrol : n-Butylacrylat im Gewichtsverhältnis 35:65 bis 80:20, speziell 55:45,
- Styrol : 2-Ethylhexylacrylat im Gewichtsverhältnis 35:65 bis 80:20, , speziell 59:41
- Methylmethacrylat : n-Butylacrylat im Gewichtsverhältnis 40:60 bis 80:20, speziell 55:45,
- Methylmethacrylat: 2-Ethylhexylacrylat im Gewichtsverhältnis 35:65 bis 80:20, speziell 59:41,
- ferner ternäre und quartäre Monomermischungen M1a/M1b, bei denen ein Teil des Styrols durch Methylmethacrylat und/oder n-Butylmethacrylat ersetzt ist, und/oder ein Teil des n-Butylacrylats durch 2-Ethylhexylacrylat ersetzt ist, z. B.:

- Methylmethacrylat : Styrol : 2-Ethylhexylacrylat im Gewichtsverhältnis 20:20:60,
- n-Butylmethacrylat : Styrol : 2-Ethylhexylacrylat im Gewichtsverhältnis 35:10:55,
- Methylmethacrylat : n-Butylmethacrylat : n-Butylacrylat im Gewichtsverhältnis 30:35:35
- Styrol : n-Butylacrylat : 2-Ethylhexylacrylat im Gewichtsverhältnis 50:25:25 und
- Styrol : Methylmethacrylat : n-Butylacrylat : 2-Ethylhexylacrylat im Gewichtsverhältnis 20:20:30:30.

Ebenfalls bevorzugt sind Polymere P, die als Monomere M1 ausschließlich Methacrylsäure-$C_1$-$C_{10}$-alkylester einpolymerisiert enthalten, z.B. n-Butylmethacrylat als alleinigem Monomer M1.

Vorzugsweise sind 90,0 bis 99,8 Gew.-%, insbesondere 95,0 bis 99,7 Gew.-% und ganz besonders bevorzugt 97,0 bis 99,5 Gew.-% der Monomere M ausgewählt unter den vorgenannten Monomeren M1. Dementsprechend machen die mit den Monomeren M1 copolymerisierbaren Monomere M2 vorzugsweise 0,2 bis 10, insbesondere 0,3 bis 5 und speziell 0,5 bis 3 Gew.-% der Monomere M aus.

Zu den Monomeren M2 zählen insbesondere Monomere mit einer erhöhten Wasserlöslichkeit, die im folgenden als Monomere MW bezeichnet werden. Unter erhöhter Wasserlöslichkeit versteht man eine Löslichkeit von wenigstens 60 g/l bei 25 °C und 1 bar. Üblicherweise enthalten die Polymere P 0,1 bis 10 Gew.-%, insbesondere 0,2 bis 5,0 Gew.-% und ganz besonders bevorzugt 0,5 bis 3,0 Gew.-% Monomere MW einpolymerisiert.

Monomere MW umfassen zum einen monoethylenisch ungesättigte Monomere mit einer sauren Funktionalität. Hierzu zählen monoethylenisch ungesättigte $C_3$-$C_8$-Monocarbonsäuren, wie Acrylsäure, Methacrylsäure, Crotonsäure, Vinylessigsäure, Acrylamidoglykolsäure und Methacrylamidoglykolsäure, monoethylenisch ungesättigten $C_4$-$C_8$-Dicarbonsäuren, wie Maleinsäure, Fumarsäure, Itaconsäure und Citraconsäure, deren Halbester mit $C_1$-$C_{12}$-Alkanolen, wie Monomethylmaleinat und Mono-n-butylmaleinat, ethylenisch ungesättigte Sulfonsäuren, wie Vinylsulfonsäure, 2-Acrylamido-2-methylpropansulfonsäure, 2-Acryloxyethansulfonsäure und 2-Methacryloxyethansulfonsäure, 3-Acryloxy- und 3-Methacryloxypropansulfonsäure, Vinylbenzolsulfonsäure und deren Salze, vorzugsweise deren Alkalimetallsalze oder deren Ammoniumsalze und insbesondere deren Natriumsalze.

Die Monomere MW umfassen ferner auch neutrale Monomere z. B. die Amide ethylenisch ungesättigter Monocarbonsäuren, wie Acrylamid und Methacrylamid, die Hydroxyalkylester der vorgenannten ethylenisch ungesättigten Mono- und Dicarbonsäuren, wie Hydroxyethylacrylat, Hydroxypropylacrylat, 4-Hydroxybutylacrylat, die entsprechenden Methacrylate und wasserlösliche N-Vinyllactame, wie N-Vinylpyrrolidon.

Eine bevorzugte Ausführungsform der vorliegenden Erfindung betrifft Zubereitungen, enthaltend Polymere P, worin die Monomere M2, bezogen auf das Gesamtgewicht der Monomere M, 0,1 bis 5 Gew.-%, insbesondere 0,2 bis 4 Gew.% und speziell 0,4 bis 2,5 Gew.-% wenigstens einer monoethylenisch ungesättigten Carbonsäure, insbesondere Acrylsäure, Methacrylsäure und/oder Itaconsäure, und gegebenenfalls 0,1 bis 2,5 Gew.-%, insbesondere 0,2 bis 2,0 Gew.-% und speziell 0,25 bis 1 Gew.-% eines der vorgenannten Amide monoethylenisch ungesättigter Carbonsäuren, insbesondere Acrylamid oder Methacrylamid umfassen. Eine andere Ausführungsform der vorliegenden Erfindung betrifft wässrige Zubereitungen, enthaltend Polymere P, worin die Monomere M2 anstelle der vorgenannten ethylenisch ungesättigten Carbonsäuren in der vorgenannten Ausführungsform eine ethylenisch ungesättigte Sulfonsäure, insbesondere 2-Acrylamido-2-methylpropansulfonsäure, 2-Acryloxyethansulfonsäure und 2-Methacryloxyethansulfonsäure, 3-Acryloxy- und/oder 3-Methacryloxypropansulfonsäure umfassen.

Zu den Monomeren M2 zählen weiterhin Silicium enthaltende Monomere, vorzugsweise ethylenisch ungesättigte Siloxangruppen enthaltende Monomere, wie sie beispielsweise in der DE-A 195 37 935 genannt sind. Auf den Inhalt dieser Schrift wird in diesem Punkt Bezug genommen. Beispiele für Siloxangruppen enthaltende Monomere sind die Vinyltrialkoxysilane, z. B. Vinyltrimethoxysilan, die Alkylvinyldialkoxysilane oder die (Meth)acryloxyalkyltrialkoxysilane, z. B. (Meth)acryloxyethyltrimethoxysilan, (Meth)acryloxypropyltrimethoxysilan. Die Silicium enthaltenden Monomere führen zu einer verbesserten Haftung des Beschichtungen auf mineralischen Untergründen und können, sofern erwünscht, in Mengen von 0,05 bis 2,0 Gew.-%, vorzugsweise 0,1 bis 1,0 Gew.-%, bezogen auf die Monomere M, verwendet werden.

Erfindungsgemäß sind die Polymere P weitgehend unvernetzt. Demzufolge umfassen die Monomere M2, bezogen auf die Monomere M höchstens 1 Gew.-%, vorzugsweise weniger als 0,5 Gew.-%, insbesondere weniger als 0,1 Gew.-% und ganz besonders bevorzugt keine polyfunktionellen Monomere MV. Zu den Monomeren MV zählen sowohl Monomere, die zwei oder mehr ethylenisch ungesättigte Doppelbindungen aufweisen, als auch ethylenisch ungesättigte Verbindungen, die neben einer ethylenisch ungesättigten Doppelbindung wenigstens eine weitere reaktive Gruppe aufweisen, die zu einer Reaktion unter Ausbildung einer Bindung mit einer funktionellen Gruppe im Polymer oder mit einer bi- oder polyfunktionellen Verbindung geeignet ist, beispielsweise eine Epoxy-, N-Alkylol- oder eine Carbonylgruppe.

Üblicherweise weist das Polymer P in den erfindungsgemäßen Zubereitungen eine Glasübergangstemperatur im Bereich von -25 bis +80 °C und vorzugsweise im Bereich von -10 bis +50 °C auf. Hierbei ist zu beachten, dass eine hochwertige Beschichtung nur dann erhalten wird, wenn die wässrige Zubereitung des filmbildenden Polymers P eine Mindestfilmbildetemperatur unterhalb der Anwendungstemperatur aufweist. Die Mindestfilmbildetemperatur hängt nun

ihrerseits von der Glasübergangstemperatur $T_G$ des Polymers P ab (siehe Ullmanns Encyclopedia of Industrial Chemistry, 5 ed, Vol. A 21, 1992, S. 169). Grundsätzlich lässt sich die Mindestfilmbildetemperatur dadurch beeinflussen, dass man der wässrigen Zubereitung sogenannte schwerflüchtige, äußere Weichmacher, z. B. Ester der Phthalsäure und/oder leichtflüchtige, niedrig siedende organische Lösungsmittel als Filmbildehilfsmittel zusetzt.

Es hat sich als vorteilhaft erwiesen, die erfindungsgemäß zur Anwendung kommenden Zubereitungen auf ihre konkreten Anwendungsziele durch Wahl einer geeigneten Glasübergangstemperatur für das Polymer P abzustimmen. So hat sich für die Beschichtung von Betonsteinen eine Glasübergangstemperatur $T_G$ für die Polymere P oberhalb -10 °C und insbesondere oberhalb +10 °C als vorteilhaft erwiesen. Vorzugsweise wird bei dieser Ausführungsform der Erfindung die Glasübergangstemperatur $T_G$ +40 °C nicht überschritten. Bei Faserzementplatten, die zum einen bei erhöhter Temperatur beschichtet werden können und die zum anderen eine hohe Blockfestigkeit aufweisen sollen, hat sich hingegen eine Glasübergangstemperatur oberhalb +20 °C und insbesondere oberhalb +30 °C als vorteilhaft erwiesen. Unter der Glasübergangstemperatur $T_G$ wird hier die gemäß ASTM D 3418-82 durch Differentialthermoanalyse (DSC) ermittelte "midpoint temperature" verstanden (vgl. Ullmann's Encyclopedia of Industrial Chemistry, 5th Edition, Volume A 21, VCH Weinheim 1992, S. 169 sowie Zosel, Farbe und Lack 82 (1976), S. 125-134, siehe auch DIN 53765). Ferner kann die Glasübergangstemperatur auch aus der Messung des E-Moduls im Kriechversuch als Funktion der Temperatur bestimmt werden.

Nach Fox (siehe Ullmanns Enzyklopädie der technischen Chemie, 4. Auflage, Band 19, Weinheim (1980), S. 17, 18) kann man die Glasübergangstemperatur $T_G$ des Polymers P abschätzen. Es gilt für die Glasübergangstemperatur von schwach vernetzten Mischpolymerisaten bei großen Molmassen in guter Näherung:

$$\frac{1}{T_G} = \frac{X^1}{T_G^{\,1}} + \frac{X^2}{T_G^{\,2}} + \cdots \frac{X^n}{T_G^{\,n}}$$

wobei $X^1, X^2, ..., X^n$ die Massenbrüche 1, 2, ..., n und $T_G^1, T_G^2, ..., T_G^n$ die Glasübergangstemperaturen der jeweils nur aus einem der Monomeren 1, 2, ..., n aufgebauten Polymeren in Grad Kelvin bedeuten. Letztere sind z. B. aus Ullmann's Encyclopedia of Industrial Chemistry, VCH, 5.ed. Weinheim, Vol. A 21 (1992) S. 169 oder aus J. Brandrup, E.H. Immergut, Polymer Handbook 3rd ed, J. Wiley, New York 1989 bekannt.

Erfindungsgemäß enthalten die filmbildenden wässrigen Zubereitungen das Polymer P in Form einer wässrigen Dispersion. Hierin weisen die Polymerteilchen in der Regel mittlere Teilchengrößen im Bereich von 50 bis 2000 nm, vorzugsweise im Bereich von 100 bis 1000 nm auf. Verfahren zur Einstellung der Polymerteilchengröße sind beispielsweise aus der EP-A-126 699, der EP-A-567 881, der EP-A-567 819, der DE-A-31 47 008 und der DE-A-42 13 967 bekannt.

Die Herstellung der Polymere P kann in einer dem Fachmann bekannten Weise durch grundsätzlich jedes Verfahren der radikalischen Polymerisation der Monomere M erfolgen. Zum Einsatz in den erfindungsgemäßen Zubereitungen kann es gegebenenfalls erforderlich sein, das bei der Polymerisation erhaltene Polymer P in eine wässrige Dispersion zu überführen. Vorzugsweise erfolgt die Herstellung der Polymere P auf dem Wege der radikalischen wässrigen Emulsionspolymerisation in Gegenwart wenigstens eines radikalischen Polymerisationsinitiators und wenigstens einer oberflächenaktiven Verbindung.

Als oberflächenaktive Verbindungen für die Emulsionspolymerisation der Monomere M kommen sowohl Schutzkolloide als auch Emulgatoren in Betracht. Vorzugsweise umfassen die oberflächenaktiven Verbindungen wenigstens einen anionischen Emulgator der Formel I und gegebenenfalls einen oder mehrere weitere anionische und/oder nichtionische Emulgatoren. Vorzugsweise umfassen die für die Herstellung der Polymere P auf dem Wege der Emulsionspolymerisation eingesetzten oberflächenaktiven Substanzen ausschließlich solche Emulgatoren, wie sie auch in der fertigen Zubereitung enthalten sind. Insbesondere wird die Gesamtmenge der in der fertigen Zubereitung enthaltenen Emulgatoren bei der Herstellung der Polymere P eingesetzt.

Für die Stabilität der wässrigen Polymerisatdispersionen der Polymere P hat es sich als vorteilhaft erwiesen, wenn ihre Herstellung durch Polymerisation einer wässrigen Emulsion wenigstens eines ethylenisch ungesättigten Monomers M in Gegenwart wenigstens eines radikalischen Polymerisationsinitiators und wenigstens zwei verschiedener anionischer Emulgatoren nach der Methode der radikalischen wässrigen Emulsionspolymerisation erfolgt, wobei die anionischen Emulgatoren wenigstens ein Salz der allgemeinen Formel I gemäß der oben angegebenen Definition und wenigstens ein Salz der allgemeinen Formel II gemäß der oben angegebenen Definition umfassen. Selbstverständlich können auch nichtionische Emulgatoren mitverwendet werden. Hinsichtlich der Art und der Menge an Emulgatoren gilt das oben gesagte. Dieses Verfahren ist neu und ebenfalls Gegenstand der vorliegenden Erfindung. Die nach diesem Verfahren erhältlichen Polymerisatdispersionen weisen eine gegenüber den Polymerisatdispersionen des Standes der Technik erhöhte Stabilität auf, und sind ebenfalls Gegenstand der vorliegenden Erfindung. Wie bereits oben gesagt, zeichnen sich die aus den Polymerisatdispersionen erhältlichen Polymerfilme und Beschichtungen durch eine deutlich verringerte Wasseraufnahme aus.

Der Vorteil der Stabilität der Polymerisatdispersionen ist nicht auf die erfindungsgemäßen Polymere P beschränkt. Er kommt jedoch besonders bei den erfindungsgemäßen Polymeren P mit einere Glasübergangstemperatur $T_G$ im Bereich von -25 bis +80°C zum tragen. Weiterhin lassen sich nach diesem Verfahren bevorzugt Polymerdispersionen herstellen, deren Polymere P aus den vorgenannten Monomeren M1 und M2 aufgebaut sind. Hinsichtlich Art und Menge der bevorzugten Monomere M1 und M2 gilt das oben Gesagte.

Als radikalische Polymerisationsinitiatoren kommen alle diejenigen in Betracht, die in der Lage sind, eine radikalische wässrige Emulsionspolymerisation auszulösen. Es kann sich dabei sowohl um Peroxide, z. B. Alkalimetallperoxodisulfate oder Wasserstoffperoxid als auch um Azoverbindungen handeln. Bevorzugt werden Redoxinitiatorsysteme verwendet, die aus wenigstens einem organischen Reduktionsmittel und wenigstens einem Peroxid und/oder Hydroperoxid zusammengesetzt sind, z. B. tert.-Butylhydroperoxid mit einer Schwefelverbindung, z. B. dem Natriumsalz der Hydroxymethansulfinsäure, Natriumsulfit, Natriumdisulfit, Natriumthiosulfat oder Acetonbissulfit oder Wasserstoffperoxid mit Ascorbinsäure. Auch können für diesen Zweck Redoxinitiatorsysteme verwendet werden, die eine geringe Menge einer im Polymerisationsmedium löslichen Metallverbindung enthalten, deren metallische Komponente in mehreren Wertigkeitsstufen auftreten kann, z. B. Eisen(II)sulfat. Ebenfalls bevorzugte Initiatoren sind Alkaliperoxodisulfate, wie Natriumperoxodisulfat oder Ammoniumperoxodisulfat. Vorzugsweise beträgt die Menge der eingesetzten radikalischen Initiatorsysteme, bezogen auf die Gesamtmenge der zu polymerisierenden Monomere, 0,05 bis 2 Gew.-%, vorzugsweise 0,1 bis 1 Gew.-%.

Das Molekulargewicht der Polymerisate kann durch Zugabe geringer Mengen, in der Regel bis zu 2 Gew.-%, bezogen auf die zu polymerisierenden Monomere, einer oder mehrerer, das Molekulargewicht regelnder Substanzen, z. B. organische Thioverbindungen, Allylalkohole oder Aldehyde eingestellt werden. Durch geeignete Regler können auch Silicium enthaltende Gruppen in das Polymer P eingeführt werden, z. B. durch Mercaptoalkyltrialkoxysilane wie Mercaptopropyltrimethoxysilan.

Die Emulsionspolymerisation kann sowohl kontinuierlich als auch nach der Batchfahrweise, vorzugsweise nach einem halbkontinuierlichen Verfahren erfolgen. Dabei können die zu polymerisierenden Monomere kontinuierlich, einschließlich Stufen- oder Gradientenfahrweise, dem Polymerisationsansatz zugeführt werden. Die Monomeren können sowohl als Monomermischung als auch als wässrige Monomeremulsion der Polymerisation zugeführt werden.

Neben der saatfreien Herstellungsweise kann zur Einstellung einer definierten Polymerteilchengröße die Emulsionspolymerisation nach dem Saatlatex-Verfahren oder in Gegenwart von in situ hergestellten Saatlatex erfolgen. Verfahren hierzu sind bekannt und können dem Stand der Technik entnommen werden (siehe EP-B 40419 sowie 'Encyclopedia of Polymer Science and Technology', Vol. 5, John Wiley & Sons Inc., New York 1966, S. 847).

Polymerisationsdruck und Polymerisationstemperatur sind von untergeordneter Bedeutung. Im Allgemeinen arbeitet man bei Temperaturen zwischen Raumtemperatur und 120 °C, vorzugsweise bei Temperaturen von 40 bis 110 °C und besonders bevorzugt zwischen 50 und 100 °C.

Im Anschluss an die eigentliche Polymerisationsreaktion ist es gegebenenfalls erforderlich, die erfindungsgemäßen, wässrigen Polymerisatdispersionen weitgehend frei von Geruchsträgern, wie Restmonomeren und anderen organischen flüchtigen Bestandteilen zu gestalten. Dies kann in an sich bekannter Weise physikalisch durch destillative Entfernung (insbesondere über Wasserdampfdestillation) oder durch Abstreifen mit einem inerten Gas erreicht werden. Die Absenkung der Restmonomere kann weiterhin chemisch durch radikalische Nachpolymerisation, insbesondere unter Einwirkung von Redoxinitiatorsystemen, wie sie z. B. in der DE-A 44 35 423, DE-A 44 19 518 sowie in der DE-A 44 35 422 aufgeführt sind, erfolgen. Bevorzugt wird die Nachpolymerisation mit einem Redoxinitiatorsystem aus wenigstens einem organischen Peroxid und einem organischen Sulfit durchgeführt.

Auf diesem Wege sind wässrige Polymerdispersionen mit einem Gehalt an Polymer P bis zu 80 Gew.-%, bezogen auf das Gesamtgewicht der Dispersion, zugänglich. Für die Herstellung der erfindungsgemäß zur Anwendung kommenden Zubereitungen werden aus praktischen Gründen vorzugsweise Dispersionen mit Polymergehalten im Bereich von 30 bis 70 Gew.-%, insbesondere 40 bis 65 Gew.-%, eingesetzt.

Vorzugsweise werden die wässrigen Dispersionen der Polymere P nach ihrer Herstellung und vor ihrem Einsatz in den erfindungsgemäßen Zubereitungen durch Zugabe einer Base, z. B. Ammoniak, schwerflüchtigen Aminen, Alkalimetall- oder Erdalkalimetallhydroxiden, Erdalkalimetalloxiden neutralisiert. Der pH-Wert der Dispersionen liegt nach der Neutralisation vorzugsweise im Bereich von pH 6 bis pH 9. Bevorzugt ist die Neutralisation mit Ammoniak oder mit Alkalimetallhydroxiden, insbesondere mit Natriumhydroxid. Bei der Neutralisation mit Natriumhydroxid hat es sich insbesondere im Hinblick auf den Schutz vor Ausblühungen als Vorteil erwiesen, wenn der pH-Wert nach der Neutralisation im Bereich von pH 6,8 bis 8,3, insbesondere pH 7,0 bis 7,9 liegt. Dieser Vorteil kommt insbesondere dann zum Tragen, wenn die Polymere P ethylenisch ungesättigte Carbonsäuren einpolymerisiert enthalten.

Die Dispersionen der Polymere P können erfindungsgemäß als solche verwendet werden. Die Zubereitungen enthalten dann wenigstens einen anionischen Emulgator, umfassend wenigstens ein Salz der allgemeinen Formel I und ein oder mehrere Salze der allgemeinen Formel II, gegebenenfalls einen oder mehrere nichtionische Emulgatoren, etwa 10 bis 60 Gew.-%, vorzugsweise 20 bis 55 Gew.-% wenigstens eines Polymers P, sowie in der Regel 0,1 bis 30 Gew.-%, vorzugsweise 0,2 bis 10 Gew.-% und insbesondere 0,5 bis 5 Gew.-% für derartige Zubereitungen übliche Hilfsmittel

und Wasser auf 100 Gew.-%. Zusätzlich können die erfindungsgemäßen Zubereitungen auch pigmenthaltig ausgestaltet sein. Sie enthalten dann neben den vorgenannten Bestandteilen in den vorgenannten Mengen bis zu 60 Gew.-%, vorzugsweise 10 bis 50 Gew.-% und speziell 15 bis 40 Gew.-%, bezogen auf das Gesamtgewicht der Zubereitung Pigmente und/oder feinteilige Füllstoffe.

Übliche Hilfsmittel sind beispielsweise Netzmittel, Fungizide, Entschäumer, Verdickungsmittel, Gefrierschutzmittel, Verlaufsförderer, Weichmacher und Filmbildehilfsmittel. Geeignete Filmbildehilfsmittel sind beispielsweise Ethylenglykol, Propylenglykol, Butylenglykol, Hexylenglykol, Diethylenglykol, Dipropylenglykol, Dibutylenglykol, deren Halbether mit $C_1$-$C_4$-Alkanolen, z. B. Diethylenglykolmonoethylether, -monobutylether, Propylenglykolmonophenylether, Propylenglykolmonopropylether, -monobutylether, Dipropylenglykolmonopropylether, -monobutylether, deren Ether-Acetate, wie Diethylenglykolmonoethyletheracetat und -monobutyletheracetat, Propylenglykolmonopropyletheracetat und -monobutyletheracetat, Dipropylenglykol-n-butyletheracetat, ferner Alkylester aliphatischer Mono- und Dicarbonsäuren, z. B. Texanol® der Eastman Kodak oder deren technische Gemische davon, z. B. Lusolvan FBH der BASF AG (Di-n-butylestergemische der Bernstein-, Glutar- und Adipinsäure). Als Weichmacher kommen alle üblichen, für Dispersionen geeigneten Weichmacher, beispielsweise (Oligo)propylenglykolalkylphenylether, wie sie z. B. als Plastilit® 3060 der BASF AG im Handel erhältlich sind, in Frage.

Ferner können die erfindungsgemäß zur Anwendung kommenden wässrigen Zubereitungen auch anorganische Füllstoffe und/oder Pigmente enthalten. Typische Pigmente sind beispielsweise Titandioxid, vorzugsweise in der Rutilform, Bariumsulfat, Zinkoxid oder Lithopone (Zinksulfid + Bariumsulfat). Zu dekorativen Zwecken enthalten die Zubereitungen häufig farbige Pigmente, beispielsweise Eisenoxide, Ruß oder Graphit. Geeignete Füllstoffe umfassen Alumosilicate, wie Feldspäte, Silikate, wie Kaolin, Talkum, Glimmer, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, Siliziumdioxid etc.

In einer bevorzugten Ausführungsform der vorliegenden Erfindung werden die wässrigen Zubereitungen in Form eines Klarlacks eingesetzt. Hierin liegt der Gehalt an Polymer P, bezogen auf das Gesamtgewicht der Zubereitung, im Bereich von 10 bis 60 Gew.-%, vorzugsweise 40 bis 55 Gew.-% und der Gehalt an Hilfsmitteln im Bereich von 0,1 bis 30 Gew.-%, vorzugsweise 0,5 bis 10 Gew.-%.

In einer anderen Ausführungsform der vorliegenden Erfindung werden die wässrigen Zubereitungen in Form pigment- und/oder füllstoffhaltiger Zubereitungen eingesetzt. In diesem Fall liegt der Gesamtgehalt an Polymer P in der wässrigen Zubereitung vorzugsweise im Bereich von 10 bis 60 Gew.-%, insbesondere im Bereich von 20 bis 40 Gew.-%, der Gehalt an Hilfsmitteln im Bereich von 0,1 bis 30 Gew.-% und vorzugsweise im Bereich von 0,5 bis 10 Gew.-% und der Gehalt an Füllstoffen und/oder Pigmenten vorzugsweise im Bereich von 10 bis 50 Gew.-% und insbesondere 15 bis 40 Gew.-%. Die Menge an Pigmenten und/oder Füllstoffen liegt im Allgemeinen zwischen 50 und 450 Gewichtsteilen, bezogen auf 100 Gewichtsteile Polymer P in der wässrigen Zubereitung. Ferner werden pigmenthaltige Zubereitungen neben den Filmbildehilfsmitteln und den Entschäumern vorzugsweise auch ein Dispergier- bzw. Netzmittel enthalten.

Die vorliegende Erfindung betrifft auch ein Verfahren zum Beschichten mineralischer Formkörper, das dadurch gekennzeichnet ist, dass man eine der hier beschriebenen wässrigen Zubereitungen auf wenigstens eine Oberfläche des mineralischen Formkörpers aufbringt. Das Aufbringen umfaßt hier und im Folgenden einen oder mehrere Schritte des Auftragens und einen oder mehrere Trocknungsschritte. In der Regel wird die aufzutragende Gesamtmenge der wässrigen Zubereitungen im Bereich von 100 bis 700 g/$m^2$ (nass gerechnet) betragen. Dies entspricht einem getrockneten Auftrag von 50 bis 400 g/$m^2$. Der Auftrag kann in an sich bekannter Weise durch Spritzen, Spachteln, Rakeln, Rollen oder Gießen erfolgen. Die sich in der Regel jedem Auftrag anschließende Trocknung kann sowohl bei Raumtemperatur als auch bei erhöhter Temperatur, beispielsweise im Bereich von 40 bis 120 °C erfolgen.

In einer bevorzugten Ausführungsform des erfindungsgemäßen Verfahrens versieht man den mineralischen Formkörper mit wenigstens zwei Beschichtungen. Hierzu bringt man in einem ersten Schritt eine erste wässrige, filmbildenden Zubereitung Z1 auf den noch unbehandelten mineralischen Formkörper auf, trocknet gegebenenfalls und bringt dann in einem zweiten Schritt eine weitere wässrige, filmbildende Zubereitung Z2 auf den mit der ersten Beschichtung versehenen Formkörper auf. Der erste Schritt als auch der zweite Schritt können wiederholt werden, so dass man auf diesem Wege zu Beschichtungen mit drei oder mehr Schichten gelangen kann. Die Zubereitungen Z1 und Z2 können sowohl gleich als auch verschieden sein.

Erfindungswesentlich ist, daß wenigstens eine der filmbildenden Zubereitungen Z1 oder Z2 eine erfindungsgemäße Zubereitung ist, die einen Emulgator der allgemeinen Formel I enthält. Bevorzugt sind sowohl Z1 als auch Z2 erfindungsgemäße Zubereitungen. Die Zubereitungen Z1 und Z2 werden in der Regel chemisch ähnliche Polymere enthalten, d.h. die das Polymer konstituierenden Monomere M unterscheiden sich nicht oder, bei Copolymeren verschiedener Monomere M, nur in den Mengenverhältnissen der Monomere M. Es hat sich allerdings als vorteilhaft erwiesen, wenn die Zubereitungen Z1 und Z2 sich dahingehend unterscheiden, daß die zuerst aufgebrachte Zubereitung Z1 einen höheren Pigment/Füllstoffgehalt aufweist als die später aufgebrachte Zubereitung Z2. Der Unterschied des Pigment/Füllstoffgehalts beträgt vorzugsweise wenigstens 10 Gew.-%. Der Pigment/Füllstoffgehalt der zweiten Zubereitung ist insbesondere ≤ 20 Gew.-%, bezogen auf das Gesamtgewicht der Zubereitung 2. Die Zubereitung 2 kann auch frei von Pigmenten verwendet werden. Hierdurch gelangt man zu besonders glänzenden Beschichtungen. Wegen weiterer Details sei an dieser Stelle auch auf die ältere Patentanmeldung P 198.10 052.3 verwiesen, auf deren Offenbarung hiermit in vollem Umfang Bezug genommen wird.

Üblicherweise wird man in dieser Ausführungsform die Zubereitung Z1 in einer Menge von 70 bis 400 g/$m^2$ (nass gerechnet) und die Zubereitung Z2 in einer Menge von 30 bis 300 g/$m^2$ auf den mineralischen Formkörper auftragen. Üblicherweise liegt das Gew.-Verhältnis der aufgetragenen Menge von Zubereitung Z1 zu Zubereitung Z2 im Bereich von 4:1 bis 1:2 und insbesondere im Bereich von 3:1 bis 1,2:1.

Das erfindungsgemäße Verfahren ist grundsätzlich auf alle Formkörper anwendbar. Seine erfindungsgemäßen Vorzüge kommen insbesondere bei Formkörpern zum tragen, die ein mineralisches Bindemittel enthalten. Seine bevorzugten Wirkungen entfaltet es insbesondere bei mineralischen Formkörpern, die Zement als Bindemittel enthalten (Betonsteine und Faserzementplatten). Unter Betonsteinen versteht man geformte Gebilde aus Beton und/oder Gasbeton, z. B. Platten, Rohre und/oder Dachziegel (Betondachsteine). Der Betonstein wird in üblicher Weise aus fertig gemischtem Beton durch ein Strangpressverfahren in bekannter Weise hergestellt. Die erfindungsgemäßen, wässrigen Zubereitungen bieten nunmehr den Vorteil, dass sie nicht nur auf den fertig abgebundenen, sondern auch auf den frisch zubereiteten, nicht vollständig abgebundenen "grünen" Betonstein aufgebracht werden können.

Das Trocknen der erfindungsgemäß beschichteten, "grünen" Betonsteine kann in üblicher Weise, gegebenenfalls bei Raumtemperatur oder erhöhter Temperatur durchgeführt werden. Vorzugsweise wird der beschichtete "grüne" Betonstein in eine sog. Kammer eingebracht. Dort wird in einem etwa 6 bis 24 Stunden dauernden Abbindeprozess bei Temperaturen im Bereich von 40 bis 70 °C der Beton abgebunden und das Copolymerisat der Beschichtungsmasse verfilmt. Nach diesem Prozess wird der Stein vorzugsweise ein zweites Mal mit der erfindungsgemäßen, wässrigen Zubereitung besprüht. Eine erneute Trocknung erfolgt in einem Tunnelofen bei etwa um 100 °C liegenden Umlufttemperaturen.

Bereits abgebundene mineralische Formkörper können auch bei üblichen Umgebungstemperaturen, z. B. Raumtemperatur, mit den erfindungsgemäßen Zubereitungen beschichtet werden.

Die vorteilhaften Eigenschaften der erfindungsgemäßen, wässrigen Zubereitungen kommen auch bei mineralischen Formkörpern zum Tragen, die mit einem Zementslurry beschichtet sind. Dieser Zementslurry umfasst in der Regel übliche Pigmente, einen Zement als mineralisches Bindemittel, übliche Hilfsmittel und Wasser in geeigneter Menge. Der Zementslurry kann auch mit Polymeren in bekannter Weise modifiziert sein. Er wird üblicherweise auf den mineralischen Formkörper, vorzugsweise einen Betonstein, der noch nicht endgültig abgebunden hat, aufgebracht. Die Zementslurryschicht weist im abgebundenen Zustand eine Schichtdicke im Bereich von 200 μm bis 2 000 μm auf. Der Auftrag der erfindungsgemäßen, wässrigen Zubereitungen kann in der oben beschriebenen Weise erfolgen.

Ferner erweisen sich die vorteilhaften Eigenschaften der erfindungsgemäßen, wässrigen Zubereitungen ähnlich vorteilhaft bei sog. Faserzementplatten, d. h. flächigen, mineralischen Formkörpern, die Zement als Bindemittel enthalten und die mineralische oder organische Fasern, z. B. Polyester- und/oder Polyamidfasern als Zuschläge enthalten. Der Auftrag der erfindungsgemäßen, wässrigen Zubereitungen erfolgt in der Regel in der für "grüne" Betonsteine beschriebenen Weise.

Die mit den erfindungsgemäßen Zubereitungen beschichteten mineralischen Formkörper zeichnen sich zum einen dadurch aus, daß die Beschichtungen bei feuchter Bewitterung deutlich weniger Wasser aufnimmt als übliche Beschichtungen. Hierdurch steigt zum Beispiel die Rutschfestigkeit der Beschichtungen. Weiterhin zeichnen sich pigmenthaltige Zubereitungen durch deutlich verringerte Farbveränderungen bei feuchter Bewitterung aus als konventionelle Beschichtungen. Auch die Festigkeit der Beschichtungen bei Feuchtbewitterung ist erhöht. Zudem sind die beschichteten Formkörper wirksam vor Ausblühungen geschützt. Diese Eigenschaften sind ähnlich wie die verbesserte Rutschfestigkeit insbesondere für Betondachsteine von Bedeutung, die daher eine bevorzugte Ausführungsform der Erfindung darstellen.

Demnach führt die Verwendung der erfindungsgemäßen, wässrigen Zubereitungen zu einer verbesserten Konservierung der Oberfläche von mineralischen Formkörpern. Die derart beschichteten mineralischen Formkörper sind neu und ebenfalls Gegenstand der vorliegenden Erfindung.

Die im Folgenden angegebenen Beispiele sollen die vorliegende Erfindung verdeutlichen.

Beispiele:

I. Herstellung und Analytik von wässrigen Dispersionen der filmbildenden Polymere P (Dispersionen D1, D2 und D3, Vergleichsdispersionen VD1, VD2 und VD3)

Glasübergangstemperatur

Die Bestimmung der Glasübergangstemperatur der Polymere P erfolgte mittels DSC nach der "mid-point"

Methode (ASTM-D 3418-82).

Dispersion D1 (nicht erfindungsgemäß)

In einem Polymerisationsgefäß legte man 539 g entionisiertes Wasser 15 g Emulgatorlösung 1 und 5 g Emulgatorlösung 2 vor und erwärmt auf 85 °C.

In einem Zulaufgefäß 1 stellte man eine Emulsion mit folgender Zusammensetzung her:

| | |
|---|---|
| 529,0 g | entionisiertem Wasser |
| 22,5 g | Emulgatorlösung 1 |
| 70,0 g | Emulgatorlösung 2 |
| 780,0 g | Methylmethacrylat |
| 720,0 g | n-Butylacrylat und |
| 15,0 g | Acrylsäure. |

In einem zweiten Zulaufgefäß 2 stellte man eine Lösung von 4,5 g Natriumperoxodisulfat in 200 g Wasser her.

Anschließend gab man unter Beibehaltung der 85 °C nacheinander in einer Portion 107 g von Zulauf 1 und 21 g von Zulauf 2 in die Vorlage und ließ 10 min reagieren.

Anschließend gab man, über räumlich getrennte Zuläufe zeitgleich beginnend, die Restmengen von Zulauf 1 innerhalb 3 h und von Zulauf 2 innerhalb 3,5 h unter Beibehaltung der 85 °C in das Polymerisationsgefäß. Nach Beendigung von Zulauf 2 ließ man 1 h nachpolymerisieren. Danach kühlte man auf 25 °C ab und gab nacheinander 15 g einer 10 gew.-%igen wässrigen tert.-Butylhydroperoxidlösung und 6,8 g einer 20 gew.-%igen Lösung des Natriumsalzes der Hydroxymethansulfinsäure in das Polymerisationsgefäß und neutralisierte mit 25 gew.-%iger wässriger Ammoniaklösung (pH ≈ 8,9). Der Feststoffgehalt der Dispersion betrug etwa 52 Gew.-%. Die Glasübergangstemperatur $T_G$ lag bei 21°C.

Emulgatorlösung 1: 20 gew.-%ige wässrige Lösung $C_{16}$-$C_{18}$-Alkylfettalkoholethoxilats, mittlerer Ethoxilierungsgrad etwa 18

Emulgatorlösung 2: 30 gew.-%ige wässrige Lösung des Natriumsalzes eines Schwefelsäurehalbesters eines ethoxilierten $C_{12}$-$C_{14}$-Fettalkohols, mittlerer Ethoxilierungsgrad etwa 30

Dispersion VD1

In einem Polymerisationsgefäß legte man 534 g entionisiertes Wasser 14,1 g Emulgatorlösung 1 und 6,2 g Emulgatorlösung 3 vor und erwärmt auf 85 °C.

In einem Zulaufgefäß 1 stellte man eine Emulsion mit folgender Zusammensetzung her:

| | |
|---|---|
| 529,0 g | entionisiertem Wasser |
| 21,0 g | Emulgatorlösung 1 |
| 40,4 g | Emulgatorlösung 3 |
| 728,0 g | Methylmethacrylat |
| 672,0 g | n-Butylacrylat und |
| 14,0 g | Acrylsäure. |

In einem zweiten Zulaufgefäß 2 stellte man eine Lösung von 4,2 g Natriumperoxodisulfat in 200 g Wasser her.

Die Polymerisation wurde in der bei Dispersion D1 beschriebenen Weise durchgeführt. Der pH-Wert lag bei 7,9 und der Feststoffgehalt bei 51,1 Gew.-%. Die Glasübergangstemperatur $T_G$ lag bei 21°C.

Emulgatorlösung 3: 45 gew.-%ige wässrige Lösung einer als Dowfax® 2A1 (Dow Chemical) im Handel üblichen Wirksubstanz (Gemisch von Mono- und Di-$C_{10}$-$C_{12}$-alkyl-Verbindung der allgemeinen Formel I als Natriumsalz).

Dispersion D2 (nicht erfindungsgemäß)

In einem Polymerisationsgefäß legte man 507 g entionisiertes Wasser 15 g Emulgatorlösung 1 und 5 g Emulgatorlösung 2 vor und erwärmt auf 85 °C.

In einem Zulaufgefäß 1 stellte man eine Emulsion mit folgender Zusammensetzung her:

| | |
|---|---|
| 550,4 g | entionisiertem Wasser |
| 22,5 g | Emulgatorlösung 1 |
| 70,0 g | Emulgatorlösung 2 |
| 780,0 g | Methylmethacrylat |
| 720,0 g | n-Butylacrylat und |
| 9,0 g | einer 50 gew.-%igen, wässrigen Lösung des Natriumsalzes der 2-Acrylamido-2-methylpropansulfonsäure, |
| 15,0 g | einer 50 gew.-%igen, wässrigen Acrylamid-Lösung. |

In einem zweiten Zulaufgefäß 2 stellte man eine Lösung von 4,5 g Natriumperoxodisulfat in 200 g Wasser her.

Anschließend gab man unter Beibehaltung der 85 °C nacheinander in einer Portion 21 g einer 50 gew.-%igen, wässrigen Lösung des Natriumsalzes der 2-Acrylamido-2-methylpropansulfonsäure, 109 g von Zulauf 1 und 21 g von Zulauf 2 in die Vorlage und ließ 5 min reagieren.

Anschließend führte man die Polymerisation in der für D1 beschriebenen Weise fort. Der Feststoffgehalt der Dispersion betrug etwa 52 Gew.-% (pH ≈ 8,9). Die Glasübergangstemperatur $T_G$ lag bei 21°C.

Dispersion VD2

In einem Polymerisationsgefäß legte man 517 g entionisiertes Wasser 14 g Emulgatorlösung 1 und 6,2 g Emulgatorlösung 3 vor und erwärmt auf 85 °C.

In einem Zulaufgefäß 1 stellte man eine Emulsion mit folgender Zusammensetzung her:

| | |
|---|---|
| 560,5 g | entionisiertem Wasser |
| 21,0 g | Emulgatorlösung 1 |
| 40,4 g | Emulgatorlösung 3 |
| 728,0 g | Methylmethacrylat |
| 672,0 g | n-Butylacrylat und |
| 8,4 g | einer 50 gew.-%igen, wässrigen Lösung des Natriumsalzes der 2-Acrylamido-2-methylpropansulfonsäure, |
| 14,0 g | einer 50 gew.-%igen, wässrigen Acrylamid-Lösung. |

In einem zweiten Zulaufgefäß 2 stellte man eine Lösung von 4,2 g Natriumperoxodisulfat in 200 g Wasser her.

Anschließend gab man unter Beibehaltung der 85 °C nacheinander in einer Portion 19,6 g einer 50 gew.-%igen, wässrigen Lösung des Natriumsalzes der 2-Acrylamido-2-methylpropansulfonsäure, 102 g von Zulauf 1 und 21 g von Zulauf 2 in die Vorlage und ließ 5 min reagieren. Die Polymerisation wurde in der bei Dispersion D1 beschriebenen Weise durchgeführt. Der pH-Wert lag bei 8,1 und der Feststoffgehalt bei 50,7 Gew.-%. Die Glasübergangstemperatur $T_G$ lag bei 21°C.

Dispersion D3 (nicht erfindungsgemäß)

In einem Polymerisationsgefäß legte man 500 g entionisiertes Wasser, 38,5 g wässrige Saatdispersion (Polystyrollatex, mittlere Teilchengröße 29 nm) und 2,3 g Emulgatorlösung 2 vor und erwärmt auf 75 °C.

In einem Zulaufgefäß 1 stellte man eine Emulsion mit folgender Zusammensetzung her:

| | |
|---|---|
| 396,8 g | entionisiertem Wasser |
| 49,0 g | Emulgatorlösung 1 |
| 91,0 g | Emulgatorlösung 2 |
| 770,0 g | Styrol |
| 2,8 g | 3-Methacryloyloxypropyl-1-trimethoxysilan |
| 630,0 g | n-Butylacrylat |

(fortgesetzt)

| | |
|---|---|
| 14,0 g | Acrylsäure und |
| 14,0 g | einer 50 gew.-%igen, wässrigen Acrylamid-Lösung. |

In einem zweiten Zulaufgefäß 2 stellte man eine Lösung von 4,2 g Natriumperoxodisulfat in 200 g Wasser her.
Anschließend gab man 20,4 g von Zulauf 2 innerhalb 5 min zu und erwärmte dabei auf 85 °C. Anschließend gab man, über räumlich getrennte Zuläufe zeitgleich beginnend, die Restmengen von Zulauf 1 innerhalb 3 h und von Zulauf 2 innerhalb 3,5 h unter Beibehaltung der 85 °C in das Polymerisationsgefäß. Nach Beendigung von Zulauf 2 ließ man 1 h nachpolymerisieren. Danach kühlte man auf 60 °C ab und gab zeitgleich beginnend innerhalb 1 h 58 g einer 4,8 gew.-%igen wässrigen tert.-Butylhydroperoxidlösung und 42,6 g einer 5,9 gew.-%igen wässrigen Lösung des Natriumsalzes der Hydroxymethansulfinsäure in das Polymerisationsgefäß. Anschließend kühlte man auf 25°C und neutralisierte mit 10 gew.-%iger wässriger Natronlauge (pH ≈ 8,2).
Der Feststoffgehalt lag bei 52,1 Gew.-%. Die Glasübergangstemperatur $T_G$ lag bei 34°C.

Dispersion VD3

In einem Polymerisationsgefäß legte man 500 g entionisiertes Wasser, 38,5 g wässrige Saatdispersion (Polystyrollatex, mittlere Teilchengröße 29 nm) und 1,6 g Emulgatorlösung 3 vor und erwärmt auf 75 °C.
In einem Zulaufgefäß 1 stellte man eine Emulsion mit folgender Zusammensetzung her:

| | |
|---|---|
| 425,3 g | entionisiertem Wasser |
| 49,0 g | Emulgatorlösung 1 |
| 60,7 g | Emulgatorlösung 3 |
| 770,0 g | Styrol |
| 630,0 g | n-Butylacrylat |
| 2,8 g | 3-Methacryloyloxypropyl-1-trimethoxysilan |
| 14,0 g | Acrylsäure und |
| 14,0 g | einer 50 gew.-%igen, wässrigen Acrylamid-Lösung. |

In einem zweiten Zulaufgefäß 2 stellte man eine Lösung von 4,2 g Natriumperoxodisulfat in 200 g Wasser her.
Die Polymerisation wurde in der bei Dispersion D3 beschriebenen Weise durchgeführt. Der pH-Wert lag bei 7,9 und der Feststoffgehalt bei 51,6 Gew.-%. Die Glasübergangstemperatur $T_G$ lag bei 34°C.

II. Herstellung von (nicht erfindungsgemäßen) Zubereitungen

1. Je 1000 Gewichtsteile der Dispersionen VD1, VD2, D1 und D2 wurden mit 10 Gewichtsteilen Butyldiglykol, 5 Gewichtsteilen eines Entschäumers (Tego Foamex® 825 der Th. Goldschmidt AG) und 20 Gewichtsteilen PLASTILIT® 3060 (BASF AG) versetzt. Die so konfektionierte Dispersion gab man zu einer wässrigen Suspension aus 40 g eines handelsüblichen Füllstoffs (Calciumcarbonat/Calciumsilikat) und 10 g Eisenoxid-Rotpigment in 20 g Wasser. Die so erhaltenen Farben ließ man vor ihrer anwendungstechnischen Prüfung 48 h bei Raumtemperatur reifen.

2. Je 1000 Gewichtsteile der Dispersionen VD3 und D3 wurden mit 40 Gewichtsteilen eines technischen Gemisches der Di-n-butylester der Bernstein-, Glutar- und Adipinsäure, 7,5 Gewichtsteilen eines Entschäumers (TEGO FOAMEX® 825 der Th. Goldschmidt AG) und 20 Gewichtsteilen PLASTILIT® 3060 (BASF AG) versetzt. Von den so konfektionierte Dispersion gab man je 392 Gewichtsteile zu einer wässrigen Suspension aus 382 g eines handelsüblichen Füllstoffs (Calciumcarbonat/Calciumsilikat) und 58 g Eisenoxid-Rotpigment in 168 g Wasser. Die so erhaltenen Farben ließ man vor ihrer anwendungstechnischen Prüfung 48 h bei Raumtemperatur reifen.

III.Bestimmung der Anwendungstechnischen Eigenschaften:

1. Wasseraufnahme

Zur Bestimmung der Wasseraufnahme goß man aus den nach II hergestellten Zubereitungen Filme und trocknete 3 Tage bei Raumtemperatur und 24 h bei 60 °C. Die Filme hatten eine Trockendicke von 500 ± 50 μm. Die so erhaltenen Filme wurden gewogen, 48 h in Wasser gelagert, von anhaftenden Wasserspuren befreit und erneut gewogen. In Tabelle 1 ist der Gewichtsunterschied zwischen trockenem und feuchtem Film in Gew.-%, bezogen auf das Gewicht des trockenen Films, angegeben.

Tabelle 1

| Dispersion | Wasseraufnahme [Gew.-%] |
|---|---|
| VD1 | 16,8 |
| D1 | 12,7 |
| VD2 | 49,1 |
| D2 | 16,5 |
| VD3 | 20,1 |
| D3 | 10,0 |

2) Zur Bestimmung des Schutzes von mineralischen Formkörpern vor Ausblühungen wurden die nach II hergestellten Zubereitungen mittels einer Spritzpistole auf einen "grünen" Betonstein*) aufgebracht (Auftrag etwa 20 g/Stein; etwa 320 g/m$^2$ sog. Naßauftrag). Anschließend trocknete man 2 h bei 40 °C und 75 % rel. Luftfeuchte und dann 4 h bei 40 °C und 95 % rel. Luftfeuchte. Danach brachte man in der gleichen Weise eine zweite Beschichtung auf 10 g/Stein) und trocknete 8 h bei 40 °C und 50 % rel. Luftfeuchte (sog. Trockenauftrag).

* ) Als "grüner" Betonstein diente ein Flachstein mit den Abmessungen 30 x 20 x 1,8 cm, der durch Extrusion eines Mörtels aus Sand (Korngröße bis 0,3 mm) und Zement (Gewichtsverhältnis Sand/Zement 4:1) sowie Wasser (Wasser/Zement-Gewichtsverhältnis 1:2,5) hergestellt wurde.

Nach der Trocknung legte man den Stein 7 d mit dem Gesicht auf ein 60 °C warmes Wasserbad. Der Grad der Ausblühungen wurde visuell beurteilt. Hierfür wird folgende Notenskala zugrunde gelegt. Die Ergebnisse sind in Tabelle 4 zusammengefasst.

0 = keine Ausblühungen
1 = fast keine Ausblühungen
2 = leichte Ausblühungen
3 = mäßige Ausblühungen
4 = starke Ausblühungen
5 = sehr starke Ausblühungen

| Dispersion | Ausblühungen |
|---|---|
| VD1 | 1 |
| D1 | 0 |
| VD2 | 0 - 1 |
| D2 | 0 - 1 |
| VD3 | 0 - 1 |
| D3 | 0 - 1 |

**Patentansprüche**

**1.** Wässrige Zubereitungen, enthaltend:

i. wenigstens ein Polymer P als filmbildenden Bestandteil, das aus ethylenisch ungesättigten Monomeren M aufgebaut ist, das in der wässrigen Phase der Zubereitung in dispers verteilter Form vorliegt und das eine

Glasübergangstemperatur $T_G$ im Bereich von -25 bis +80°C aufweist, und
ii. wenigstens einen anionischen Emulgator, ausgewählt unter den Salzen der allgemeinen Formel I,

$$Alk\text{-}[O\text{-}Et]_n\text{-}OSO_2O^- M^+ \quad (I)$$

worin

Alk für einen linearen oder verzweigten, gesättigten Al- kylrest mit 10 bis 18 Kohlenstoffatomen steht,
Et für 1,2-Ethylen steht
n eine ganze Zahl > 20 bis 40 bedeutet, und
$M^+$ für ein einwertiges Kation oder ein Kationenäquiva- lent steht,

oder Mischungen dieser Salze, und
wenigstens einen weiteren anionischen Emulgator, ausgewählt unter den Salzen der allgemeinen Formel II,

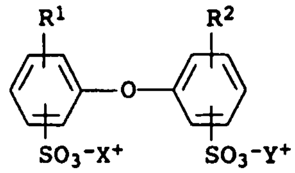
(II)

worin

$R^1$ und $R^2$ unabhängig voneinander für Wasserstoff oder ei- nen linearen oder verzweigten Alkylrest mit 4 bis 24 C-Atomen stehen und nicht gleichzeitig Wasserstoff sind, und
$X^+$ und $Y^+$ gleich oder verschieden sind und jeweils für ein einwertiges Kation oder ein Kationenäquivalent stehen.

**2.** Zubereitungen nach Anspruch 1, wobei der anionische Emulgator eine Mischung von Salzen der allgemeinen Formel I enthält, worin Alk für Alkylreste mit 12 bis 14 Kohlenstoffatomen steht und n im Mittel den Wert 30 aufweist.

**3.** Zubereitungen nach einem der vorhergehenden Ansprüche, wobei $M^+$ in Formel I für ein Natriumion steht.

**4.** Zubereitungen nach einem der vorhergehenden Ansprüche, enthaltend zusätzlich zu dem Salz der allgemeinen Formel I und II wenigstens einen nichtionischen Emulgator.

**5.** Zubereitungen nach einem der vorhergehenden Ansprüche, worin die Gesamtmenge an Emulgatoren im Bereich von 0,2 bis 10 Gew.-%, bezogen auf das Polymer P, liegt.

**6.** Zubereitungen nach einem der vorhergehenden Ansprüche, worin die Monomere M

i. 70 bis 99,9 Gew.-% wenigstens eines Monomers M1, ausgewählt unter vinylaromatischen Monomeren, den Estern monoethylenisch ungesättigter $C_3$-$C_8$-Monocarbonsäuren mit $C_1$-$C_{12}$-Alkanolen und den Vinylestern aliphatischer $C_1$-$C_{18}$-Monocarbonsäuren, und
ii. 0,1 bis 30 Gew.-% wenigstens eines damit copolymerisierbaren Monomers M2 umfassen.

**7.** Zubereitungen nach einem der vorhergehenden Ansprüche, enthaltend, bezogen auf ihr Gesamtgewicht:

- wenigstens einen anionischen Emulgator, umfassend wenigstens ein Salz der allgemeinen Formel I und ein oder mehrere Salze der allgemeinen Formel II,
- gegebenenfalls einen oder mehrere nichtionische Emulgatoren
- 10 bis 60 Gew.-% wenigstens eines Polymers P,
- 0,1 bis 30 Gew.-% übliche Hilfsmittel und
- 0 bis 60 Gew.-% Pigmente und/oder feinteilige Füllstoffe
- sowie Wasser auf 100 Gew.-%.

**8.** Verwendung von wässrigen Zubereitungen nach einem der Ansprüche 1 bis 7 zum Beschichten mineralischer Formkörper.

**9.** Wässrige Polymerisatdispersion, erhältlich durch Polymerisation einer wässrigen Emulsion wenigstens eines ethylenisch ungesättigten Monomers M nach der Methode der radikalischen wässrigen Emulsionspolymerisation in Gegenwart wenigstens eines radikalischen Polymerisationsinitiators und wenigstens zwei verschiedener anionischer Emulgatoren, umfassend wenigstens ein Salz der allgemeinen Formel I gemäß der in Anspruch 1 gegebenen Definition und wenigstens eine Salz der allgemeinen Formel II gemäß der in Anspruch 1 gegebenen Definition.

## Claims

**1.** An aqueous preparation comprising:

i. as film-forming constituent at least one polymer P which is composed of ethylenically unsaturated monomers M and which is present in dispersed form in the aqueous phase of the preparation and which has a glass transition temperature $T_G$ in the range from -25 to +80°C, and
ii. at least one anionic emulsifier selected from the class consisting of the salts of formula I

$$Alk\text{-}[O\text{-}Et]_n\text{-}OSO_2O^- M^+ \qquad (I)$$

where

Alk is linear or branched, saturated alkyl having from 10 to 18 carbon atoms,
Et is 1,2-ethylene
n is an integer from > 20 to 40, and
$M^+$ is a monovalent cation or a cation equivalent,

or mixtures of these salts, and at least one other anionic emulsifier selected from the class consisting of the salts of formula II

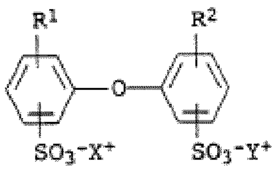

(II)

where

$R^1$ and $R^2$, independently of one another, are hydrogen or linear or branched alkyl having from 4 to 24 carbon atoms and are not simultaneously hydrogen, and
$X^+$ and $Y^+$ are identical or different and each is a monovalent cation or a cation equivalent.

**2.** The preparation according to claim 1, where the anionic emulsifier comprises a mixture of salts of formula I, Alk is alkyl having from 12 to 14 carbon atoms and n has an average value of 30.

**3.** The preparation according to any one of the preceding claims, where $M^+$ in formula I is a sodium ion.

**4.** The preparation according to any one of the preceding claims and comprising, in addition to the salt of formula I and II, at least one nonionic emulsifier.

**5.** The preparation according to any one of the preceding claims, where the total amount of emulsifiers is from 0.2 to 10% by weight, based on the polymer P.

**6.** The preparation according to any one of the preceding claims, where the monomers M comprise

i. from 70 to 99.9% by weight of at least one monomer M1, selected from the class consisting of vinylaromatic monomers, the esters of monoethylenically unsaturated $C_3$-$C_8$ monocarboxylic acids with $C_1$-$C_{12}$ alkanols and the vinyl esters of aliphatic $C_1$-$C_{18}$ monocarboxylic acids, and
ii. from 0.1 to 30% by weight of at least one monomer M2 copolymerizable therewith.

**7.** The preparation according to any one of the preceding claims, comprising, based on its total weight:

- at least one anionic emulsifier comprising at least one salt of formula I and one or more salts of formula II,
- optionally one or more nonionic emulsifiers,
- from 10 to 60% by weight of at least one polymer P,
- from 0.1 to 30% by weight of conventional auxiliaries,
- from 0 to 60% by weight of pigments and/or finely divided fillers,
- and also water to 100% by weight.

**8.** The use of aqueous preparations according to any one of claims 1 to 7 for coating mineral moldings.

**9.** An aqueous polymer dispersion obtainable by polymerizing an aqueous emulsion of at least one ethylenically unsaturated monomer M by free-radical aqueous emulsion polymerization in the presence of at least one free radical polymerization initiator and of at least two different anionic emulsifiers comprising at least one salt of formula I as defined in claim 1 and at least one salt of formula II as defined in claim 1.

**Revendications**

**1.** Compositions aqueuses contenant :

i. au moins un polymère P comme composant filmogène, qui est constitué de monomères éthyléniquement insaturés M, se présente dans la phase aqueuse de la composition sous une forme répartie de manière dispersée et présente une température de transition vitreuse $T_G$ de l'ordre de -25 à +80°C, et
ii. au moins un agent émulsifiant anionique, choisi parmi les sels de la formule générale I :

$$Alk\text{-}[O\text{-}Et]_n\text{-}OSO_2O^-\ M^+ \qquad (I)$$

dans laquelle

Alk représente un radical alkyle saturé, linéaire ou ramifié, comportant 10 à 18 atomes de carbone,
Et représente du 1,2-éthylène,
N représente un nombre entier >20 à 40, et
$M^+$ représente un cation monovalent ou un équivalent cationique,

ou des mélanges de ces sels, et
au moins un autre agent émulsifiant anionique, choisi parmi les sels de la formule générale II :

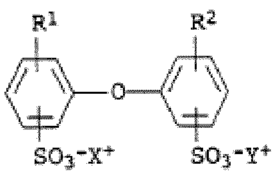
(II)

dans laquelle $R^1$ et $R^2$ représentent, indépendamment l'un de l'autre, de l'hydrogène ou un radical alkyle linéaire ou ramifié comportant 4 à 24 atomes de C et ne représentent pas simultanément de l'hydrogène, et
$X^+$ et $Y^+$ sont identiques ou différents et représentent chacun un cation monovalent ou un équivalent cationique.

**2.** Compositions suivant la revendication 1, dans lesquelles l'agent émulsifiant anionique contient un mélange de sels de la formule générale I, où Alk représente des radicaux alkyle comportant 12 à 14 atomes de carbone et n présente

en moyenne la valeur de 30.

**3.** Compositions suivant l'une des revendications précédentes, dans lesquelles $M^+$ représente dans la formule I un ion sodium.

**4.** Compositions suivant l'une des revendications précédentes, contenant, en supplément du sel de la formule générale I et II, au moins un agent émulsifiant non ionique.

**5.** Compositions suivant l'une des revendications précédentes, dans lesquelles la quantité totale d'agents émulsifiants est de l'ordre de 0,2 à 10% en poids par rapport au polymère P.

**6.** Compositions suivant l'une des revendications précédentes, dans lesquelles les monomères M comprennent

i. 70 à 99,9% en poids d'au moins un monomère M1, choisi parmi des monomères vinyl-aromatiques, les esters d'acides monocarboxyliques en $C_3$-$C_8$ monoéthyléniquement insaturés avec des alcanols en $C_1$-$C_{12}$ et les esters vinyliques d'acides monocarboxyliques en $C_1$-$C_{18}$ aliphatiques, et
ii. 0,1 à 30% en poids d'au moins un monomère M2 copolymérisable avec eux.

**7.** Compositions suivant l'une des revendications précédentes, contenant, par rapport à leur poids total :

au moins un agent émulsifiant anionique, comportant au moins un sel de la formule générale I et un ou plusieurs sels de la formule générale II,
éventuellement un ou plusieurs agents émulsifiants non ioniques,
10 à 60% en poids d'au moins un polymère P,
0,1 à 30% en poids d'adjuvants courants, et
0 à 60% en poids de pigments et/ou de substances de remplissage finement divisées,
ainsi que de l'eau à 100% en poids.

**8.** Utilisation de compositions aqueuses suivant l'une des revendications 1 à 7, pour le revêtement de corps façonnés minéraux.

**9.** Dispersion aqueuse de polymère, que l'on peut obtenir par polymérisation d'une émulsion aqueuse d'au moins un monomère éthyléniquement insaturé M selon la méthode de la polymérisation en émulsion aqueuse radicalaire en présence d'au moins un amorceur de polymérisation radicalaire et d'au moins deux agents émulsifiants anioniques différents, comportant au moins un sel de la formule générale I suivant la définition donnée dans la revendication 1 et au moins un sel de la formule générale II conforme à la définition donnée dans la revendication 1.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 3901073 A
- DE 19514266 A
- DE 19537935 A
- DE 3147008 A
- DE 4213967 A
- DE 4435423 A
- DE 4419518 A
- DE 4435422 A